Europäisches Patentamt

European Patent Office

Office européen des brevets

(19)

(11) Veröffentlichungsnummer: **0 001 649**
**B1**

(12) **EUROPÄISCHE PATENTSCHRIFT**

(21) Anmeldenummer: **78200200.0**

(22) Anmeldetag: **20.09.78**

(51) Int. Cl.³: **C 03 B 35/00, B 65 G 47/74**

(54) Glasformmaschine mit mehreren Stationen

(30) Priorität: **18.10.77 DE 2746675**

(43) Veröffentlichungstag der Anmeldung:
**02.05.79 Patentblatt 79/09**

(45) Bekanntmachung des Hinweises auf die Patenterteilung:
**03.09.80 Patentblatt 80/18**

(84) Benannte Vertragsstaaten:
**BE CH FR GB LU NL SE**

(56) Entgegenhaltungen:
**DE - A - 2 307 221**
**DE - A - 2 456 720**
**DE - C - 1 704 112**
**US - A - 3 812 690**
**US - A - 3 923 147**
**US - A - 4 007 028**

(73) Patentinhaber: **Hermann Heye**
**Allee**
**D - 3063 Obernkirchen (DE)**

(72) Erfinder: **Becker, Kurt, Dr.-Ing.**
**Vor den Tannen 7**
**D - 3063 Obernkirchen (DE)**
**Bögert, Hermann**
**Birkenweg 19**
**D - 3262 Auetal 2**
**Ortsteil Rolfshagen (DE)**
**Schwarzer, Siegfried**
**Haus Nr. 14**
**D - 3071 Stöckse (DE)**
**Seidel, Hans-Georg**
**Gerhart-Hauptmann-Weg 7**
**D - 3260 Rinteln (DE)**

(74) Vertreter: **Kosel, Peter, Dipl.-Ing.**
**Postfach 129 Hohenhöfen 5**
**D - 3353 Bad Gandersheim (DE)**

Courier Press, Leamington Spa, England.

# 0 001 649

## Glasformmaschine mit mehreren Stationen

Die Erfindung betrifft eine Maschine mit mehreren Stationen und mit je Station einer Vorrichtung zum Überschieben von Glasgegenständen von einer Absetzplatte auf ein allen Stationen gemeinsames Förderband, bestehend aus einem druckmediumbetätigbaren, auf einer senkrechten Welle befestigten Zylinder, der eine einen Überschieber tragende Kolbenstange ein- und ausfährt, die auf Grund einer Wellendrehung zwischen dem Förderband und der Absetzplatte hin- und herschwenkbar ist.

Eine bekannte I.S.-Maschine dieser Art (US—PS 3 812 690) ist durch eine Hauptsteuerwelle mechanisch gesteuert. Die Hauptsteuerwelle treibt eine zusätzliche Hilfssteuerwelle an, auf der für jede Station der I.S.-Maschine eine Kurvenscheibe einstellbar befestigt ist. Alle diese Kurvenscheiben werden also zwangsweise von der Hilfssteuerwelle gemeinsam drehend angetrieben. Vor Beginn des Maschinenbetriebs müssen die einzelnen Kurvenscheiben relativ zueinander auf den gewünschten Stationswinkel drehend relativ zu der Hilfssteuerwelle eingestellt werden. Diese Einstellung geschieht entsprechend der Reihenfolge, in der die einzelnen Stationen der I.S.-Maschine mit Glasposten beaufschlagt werden. Die einzelnen Kurvenscheiben sind identisch, sitzen jedoch, wie erwähnt, in unterschiedlichem Drehwinkel relativ zueinander fest voreingestellt auf der Hilfssteuerwelle.

Bei der bekannten I.S.-Maschine kommt es im Betrieb vor, daß die Glasgegenstände auf dem Förderband nicht den gleichen Abstand voneinander aufweisen. Für die optimale Weiterbehandlung der Glasgegenstände nach dem Verlassen der I.S.-Maschine ist dies nicht tragbar. In der Praxis muß daher bei der bekannten I.S.-Maschine beim Auftreten solcher ungleichen Abstände der Glasgegenstände auf dem Förderband und auch zur zeitlichen Anpassung des Überschiebens an die Geschwindigkeit des Förderbandes und weiterhin bei Änderung der Anzahl der aktiven produzierenden Stationen einer I.S.-Maschine die Hilfssteuerwelle bei im übrigen weiterlaufender I.S.-Maschine abgekuppelt und angehalten werden, da es ausgeschlossen ist, die einzelnen Kurvenscheiben während des Laufs der Hilfssteuerwelle zu justieren. Da während dieser Zeit alle Überschiebevorrichtungen stillgelegt sind und keine fertigen Glasgegenstände auf das Förderband abgegeben werden können, muß auch die Zufuhr von Glastropfen zu der I.S.-Maschine unterbrochen werden. Das bringt Produktionseinbußen und auch thermische Probleme mit sich, weil bei jeder Unterbrechung der Glaszufuhr zur Maschine das bis dahin bestehende thermische Gleichgewicht gestört un bei erneuter Glaszufuhr bis zur Wiedergewinnung dieses Gleichgewichts mit fehlerhaften Glasgegenständen zu rechnen ist. Ein weiterer schwerwiegender Nachteil dieser bekannten mechanischen Steuerung der Überschiebevorrichtungen ist der, daß man auch nach einer Justierung der Kurvenschieben auf der Hilfssteuerwelle nicht die Gewähr hat, daß dann die Abstände der Glasgegenstände auf dem Förderband tatsächlich gleich sind. Es ist unter Umständen eine erneute Justierung oder Nachjustierung im Sinne einer Optimierung erforderlich. Das bringt zusätzliche Produktionsverluste.

Ein weiterer Nachteil der bekannten mechanischen Steuerung der Überschiebevorrichtungen ist der, daß man die einzelnen Überschiebevorrichtungen nicht phasengleich zueinander laufen lassen kann, was zur anfänglichen Einrichtung und Funktionskontrolle der Überschiebevorrichtungen vor Beginn des eigentlichen Maschinenbetriebs wünschenswert ist.

Aus der US—PS 4 007 028 ist eine I.S.-Glasformmaschine an sich bekannt, bei der jede Station mit einer Einfachform und einem die jeweils fertiggeblasene Flasche von der Absetzplatte rechtwinklig zur Längsachse des Förderbandes auf das Förderband schiebenden Überschiebearm versehen ist. Die bekannten Überschiebearme werden also im Gegensatz zum Anmeldungsgegenstand nicht gedreht sondern nur linear bewegt. Diese Bewegung geschieht durch im einzelnen nicht offenbare Fluid-, vorzugsweise Druckluftmotoren, die jeweils durch Ventile in einem Ventilgehäuse mit Druckluft beaufschalgt werden. Die Ventile werden durch Ausgangssignale eines Rechners angesteuert und betätigt, wobei der Beginn der Bewegung und die Bewegungsgeschwindigkeit der einzelnen Überschiebearme unabhängig voneinander innerhalb bestimmter Grenzwerte an einem mit dem Rechner verbundenen Steuerpult auch während des Betriebs einstellbar sind. Nachteilig sind dabei der komplizierte, aufwendige und störanfällige Aufbau der Ventilgehäuse und ihrer Ventile und die Tatsache, daß die hier geforderte langsame, für die noch nicht voll erstarrten Flaschen schonende Überschiebebewegung von genau definiertem Ablauf mit derartigen Druckluftantrieben nicht realisierbar ist. Insbesondere ist der Bewegungsablauf eines solchen Druckluftantriebs nicht reproduzierbar von Arbeitszyklus zu Arbeitszyklus. Dies hat zur Folge, daß die überzuschiebende Flasche nicht auf ihren Platz auf dem Förderband gelangt. Ungleichmäßige Abstände der Flaschen auf dem Förderband werden daher verhältnismäßig oft eintreten und müssen entsprechend oft mittels Einstellungskorrektur durch die Bedienungsperson am Steuerpult des Rechners beseitigt werden.

Aus der DE—OS 1 704 112 ist es an sich bekannt, in einer Glasformmaschine Werkstückhalter mit Mündungswerkzeugen auf ihrem während des Verarbeitungszyklus zurückgelegten Weg jeweils durch einen eigenen Elektromotor über ein Spezialgetriebe anzutreiben, wobei die Elektromotoren unabhängig voneinander wahlweise steuerbar und regelbar sind. Eine Vorrichtung zum Überschieben der fertigen Hohlgegenstände auf ein Förderband ist in dieser Druckschrift nicht offenbart.

Der Erfindung liegt die Aufgabe zugrunde, zumindest annähernd gleichen Abstand zwischen

2

aufeinanderfolgenden Glasgegenständen auf dem Förderband auch während des Maschinenbetriebs mit einfachen Mitteln einzustellen.

Diese Aufgabe ist nach der Erfindung dadurch gelöst, daß die Wellendrehung von einem Elektromotor erzeugt wird, dessen Drehbewegung unabhängig von den Elektromotoren der übrigen Überschiebevorrichtungen auch während des Betriebs mittels einer Steuerschaltung steuerbar und/oder regelbar ist. Durch solche Steuerung und/oder Regelung eines oder mehrerer Elektromotoren läßt sich genau derjenige Zeitpunkt einstellen, an dem die zugehörige Überschiebevorrichtung ihre Glasgegenstände auf dem gemeinsamen Förderband abgibt. Durch Veränderung dieses Zeitpunkts ist gleichzeitig der relativ Abstand der aufeinanderfolgenden Glasgegenstände auf dem Förderband bestimmt. Der Maschinenführer braucht also während des Maschinenbetriebs lediglich die relativen Abstände der Glasgegenstände auf dem Förderband zu beobachten. Stellt er ungleiche Abstände fest, kann er von den jeweiligen Glasgegenständen auf diejenige Station der Maschine schließen, die für das Auftreten der beobachteten ungleichen Abstände verantwortlich ist. Der Maschinenführer kann dann den Elektromotor der Überschiebevorrichtung der betreffenden Station in geeigneter Weise steuern und/oder regeln, bis die relativen Abstände der auf dem Förderband aufeinanderfolgenden Glasgegenstände wieder gleich sind. Es ist nicht mehr erforderlich, zu diesem Zweck die Produktion zu unterbrechen. Vielmehr läßt sich jede Abstandskorrektur bei laufender Maschine und darüberhinaus sehr feinfühlig und genau durchführen.

Dabei können die Überschiebevorrichtungen von einer Hauptsteuerwelle der Maschine abgeleitet steuerbar sein. Die Steuerung und/oder Regelung der einzelnen Elektromotoren der Überschiebevorrichtungen kann jedoch auch aus einer elektronischen Gesamtsteuerung der Maschine abgeleitet sein.

Zur Vereinfachung werden die einzelnen Elektromotoren nachfolgend kurz als "Motoren" bezeichnet.

Jeder Überschieber hat so viele Finger wie gleichzeitig Glasgegenstände in der zugehörigen Station hergestellt werden. Bei Doppelformbetreib hat also jeder Überschieber zwei Finger.

Nach einer Ausführungsform der Erfindung ist an einer Kurbel des Motors ein Pleuel angelenkt, das andererseits an einer mit der Welle des Zylinders gekuppelten Schwinge angelenkt ist. Über die Auswahl der relativen wirksamen Längen der Kurbel, des Pleuels und der Schwinge hat man es in der Hand, dem Überschieber einen günstigen Geschwindigkeitsverlauf relativ zu dem in üblicher Weise mit der Maschine synchronisierten Förderband zu geben.

Eine ander Ausführungsform der Erfindung ist dadurch gekennzeichnet, daß in der Steuerschaltung für die Motoren der Überschiebevorrichtungen einer Steuerlogik an einem Eingang während eines Maschinenzyklus für jede Station ein Taktsignal und an einem weiteren Eingang ein am Ende eines Maschinenzyklus die Steuerlogik rückstellendes Maschinensignal zuführbar sind, daß jeder Station ein in jedem Maschinenzyklus jeder aktiven Station in vorherbestimmter zeitlicher Reihenfolge einen Startimpuls liefernder Ausgang der Steuerlogik zugeordnet ist, daß jeder Ausgang der Steuerlogik mit einem Eingang einer Sollwertaufbereitungsschaltung verbunden ist, die über einen weiteren Eingang mit einem für alle Stationen gleichen Spannungssollwert versorgt wird, ein über einen anderen Eingang einstellbares, mit dem Startimpulsausgang der Steuerlogik verbundenes Verzögerungsglied aufweist und einen mit dem Spannungssollwerteingang und mit einem Ausgang des Verzögerungsglieds verbundenen elektronischen Analogschalter aufweist, dessen Ausgang über einen Leistungsverstärker mit dem Motor verbunden ist. Dazu ist jeder Motor vorzugsweise als stufenlos in der Drehzahl regelbarer, permanent erregter Gleichstrom-Getriebemotor ausgebildet. Inaktiv sind solche Stationen einer Maschine, in denen vorübergehend Glasgegenstände nicht hergestellt werden, während die übrigen, aktiven Stationen Glasgegenstände fertigen. Der Spannungssollwert kann z.B. durch ein externes Potentiometer einstellbar sein und ist proportional der Solldrehzahl des Motors. Das Ausmaß der Verzögerung läßt sich an dem Verzögerungsglied z.B. ebenfalls durch ein externes Potentiometer einstellen. Dadurch läßt sich die Phasenlage des Startzeitpunkts jedes Motors relativ zum Maschinenzyklus individuell einstellen.

Nach einer weiteren Ausführungsform der Maschine ist durch eine Hauptsteuerwelle der Maschine eine allen Stationen gemeinsame Geberscheibe mit Schaltelementen antreibbar, wobei eines des Schaltelemente einem das Maschinensignal erzeugenden stationären Wandler und die übrigen Schaltelemente einem gemeinsamen, die Taktsignale erzeugenden stationären Wandler zugeordnet sind. So lassen sich einfach und sehr genau das Maschinensignal und die Taktsignale gewinnen. Die Geberscheibe kann z.B. als Lochscheibe für optische Abtastung oder als Scheibe mit Steuernocken jeweils für kompatible Wandler ausgebildet sein. Eine Änderung der Anzahl der aktiven Stationen einer I.S.-Maschine und auch Anpassungen des Abgabewinkels der Überschiebevorrichtungen der aktiven Stationen an die Geschwindigkeit des Förderbandes lassen sich leicht und schnell ohne Produktionsverlust durch den Einbau einer anderen Geberscheibe bewerkstelligen.

Nach einer anderen Ausführungsform der Erfindung ist zwischen die Hauptsteuerwelle und die Geberscheibe ein Phasenverstellgetriebe eingeschaltet. Diese Getriebe gestattet es, die Phasenlage der allen Stationen gemeinsamen Geberscheibe relativ zu der Hauptsteuerwelle einzustellen.

Nach einer Ausführungsform der Erfindung weist die Steuerlogik einen mit dem Maschinensignal und den Taktsignalen gespeisten elektronischen Zähler auf, wobei der Zähler für jede Station der Maschine eine jeweils allen Stationen gemeinsame Ausgangsleitung aufweist, wobei ferner für jede Station jede Ausgangsleitung mit einem gesonderten Kontakt eines Kodierschalters verbunden ist, und wobei ein Schleifer des Kodierschalters mit jeweils einem der Kontakte verbindbar ist und ständig mit dem Startimpulseingang der Sollwertaufbereitungsschaltung verbunden ist. Durch diese Kodierschalter läßt sich sehr einfach diejenige Reihenfolge nachbilden, in der die zugehörigen Stationen mit Glasposten beschickt werden.

Nach einer weiteren Ausführungsform der Erfindung weist jeder Kodierschalter einen eine Nullstellung ohne Startimpulsübermittlung für den Schleifer definierenden zusätzlichen Kontakt auf. Hat eine Maschine z.B. zehn Stationen, von denen bei einer bestimmten Produktion zwei Stationen nicht verwendet werden sollen, werden lediglich die Schleifer der Kodierschalter der betreffenden Stationen jeweils auf den die Nullstellung definierenden Kontakt gestellt. Dadurch werden zur Vermeidung unnötigen Verschleißes die zugehörigen Überschiebevorrichtungen außer Betrieb gesetzt. Außerdem wird, wie zuvor erwähnt, eine andere Geberscheibe eingebaut.

Nach einer Ausführungsform der Erfindung ist zwischen das Verzögerungsglied und den elektronischen Analogschalter ein Flipflop eingeschaltet, dessen Reset-Eingang mit einem in einer Endlage der Kurbel betätigbaren Impulsgeber verbunden ist. So läßt sich auf einfache Weise ein Abschaltsignal für den Motor gewinnen. Der Impulsgeber kann z.B. als durch die Kurbel betätigbarer Endschalter ausgebildet sein.

Nach einer Ausführungsform der Erfindung ist mit jedem Motor ein Tachogenerator gekuppelt, der mit einem Eingang des regelbaren Leistungsverstärkers verbunden ist. Über diese Regelstrecke läßt sich die Motordrehzahl konstant halten. Der Ist-Wert der Motordrehzahl wird als analoges elektrisches Signal zur Regelung des Verstärkungsfaktors des Leistungsverstärkers verwendet.

Nach einer anderen Ausführungsform der Erfindung sind mit jedem Motor ein Tachogenerator und ein Drehwinkelstellungsgeber gekuppelt, die jeweils mit einem Eingang des regelbaren Leistungsverstärkers verbunden sind. Dadurch ist eine zuverlässige Lageregelung für die durch den Motor angetriebenen Teile der Überschiebevorrichtung ermöglicht.

Nach einer weiteren Ausführungsform der Erfindung ist in jeder Sollwertaufbereitungsschaltung parallel zu dem elektronischen Analogschalter ein elektronischer Schleichwertanalogschalter vorgesehen, an dessen einem Eingang ein für alle Stationen gleicher Schleichspannungssollwert liegt und dessen Ausgang über den Leistungsverstärker mit dem Motor verbunden ist, wobei der Schleichwertanalogschalter durch ein den Analogschalter öffnendes Signal schließbar und durch ein von der Überschiebevorrichtung abgeleitetes Lagesignal wieder öffenbar ist. Zweckmäßigerweise ist der Schleichspannungssollwert kleiner als der davor wirksame Spannungssollwert und außerdem von konstanter Größe. Die Überschiebevorrichtung kann also in ihrer Endlage aus einer definierten Schleichfahrt heraus sehr positionsgenau angehalten werden.

Nach einer Ausführungsform der Erfindung ist mit einem zusätzlichen Eingang jedes Verzögerungsgliedes eine allen Stationen gemeinsame Handstartsteuerleitung mit einem Handstartschalter verbunden. Die Handstartsteuerung dient dazu, vor Betriebsbeginn der Maschine alle Überschiebevorrichtungen phasengleich miteinander laufen zu lassen. Man kann dann notfalls die Phasenlage jeder Überschiebevorrichtung relativ zu den übrigen Überschiebevorrichtungen einstellen, bevor die Produktion aufgenommen wird. Handstartsteuerung und Automatikbetrieb sind in an sich bekannter Weise gegeneinander verriegelbar, so daß nur die eine oder die andere Betriebsweise möglich ist. Auf die Handstartsteuerleitung werden Startimpulse gegeben, die entweder von einem gesonderten Impulsgeber oder von Maschinensignal abgeleitet sind.

Im folgenden wird die Erfindung anhand der in den Zeichnungen dargestellten Ausführungsbeispiele näher erläutert. Es zeigen:

Fig. 1 die Draufsicht auf einen Teil einer Überschiebevorrichtung,
Fig. 2 die Ansicht gemäß Linie II—II in Fig. 1, teilweise im Schnitt,
Fig. 3 die Schnittansicht nach Linie III—III in Fig. 2,
Fig. 4 die Ansicht gemäß Linie IV—IV in Fig. 2,
Fig. 5 die schematische Draufsicht auf eine Maschine mit mehreren Stationen,
Fig. 6 schematisch ein Getriebe der Überschiebevorrichtung,
Fig. 7 und 8 Bewegungsdiagramme des Getriebes gemäß Fig. 6,
Fig. 9 schematisch den mechanischen Antrieb einer Geberscheibe,
Fig. 10 die Ansicht gemäß Linie X—X in Fig. 9,
Fig. 11 eine elektronische Steuerschaltung für Motoren der Überschiebevorrichtungen,

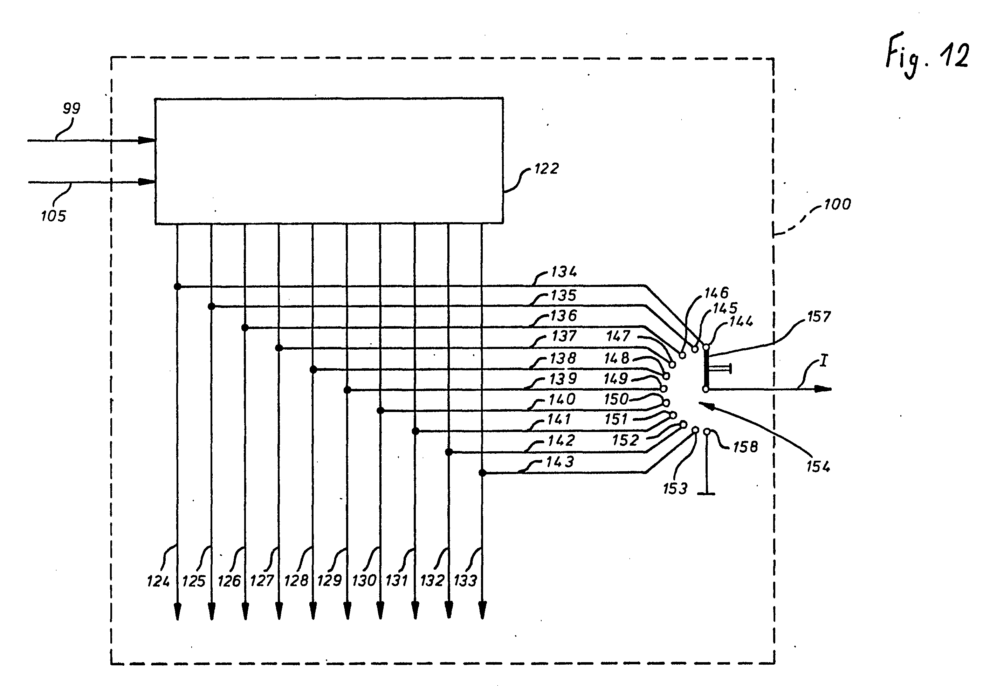

Fig. 12 Einzelheiten der Steuerlogik gemäß Fig. 11,
Fig. 13 Einzelheiten der Sollwertaufbereitungsschaltung gemäß Fig. 11,
Fig. 14 einen abgewandelten Teil der Schaltung gemäß Fig. 11,
Fig. 15 einen wiederum abgewandelten Teil der Schaltung gemäß Fig. 11,
Fig. 16 nochmals einen abgewandelten Teil der Schaltung gemäß Fig 11 und
Fig. 17 Einzelheiten einer Sollwertaufbereitungsschaltung gemäß Fig. 16 in Abwandlung und als Teil von Fig. 13.

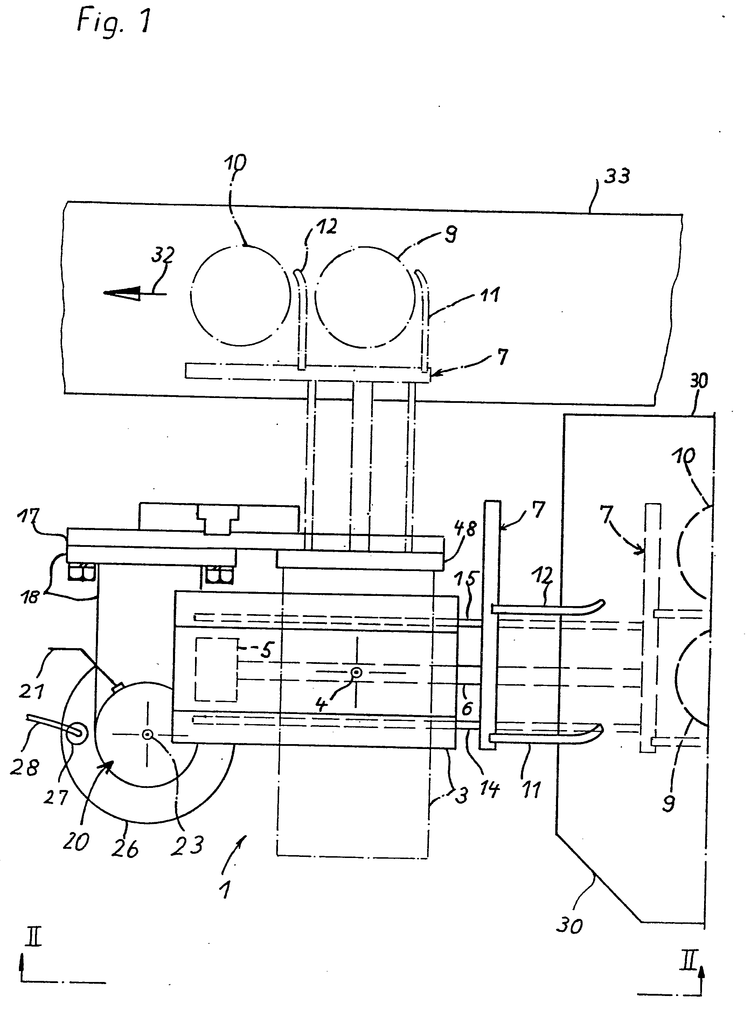

Fig. 1 zeigt eine Überschiebevorrichtung 1 mit einem druckmediumbetätigbaren Zylinder 3, der um eine Hochachse 4 schwenkbar gelagert ist. Ein Kolben 5 des Zylinders 3 trägt an seiner Kolben-

4

stange 6 einen Überschieber 7, der für jeden gleichzeitig überzuschiebenden Glasgegenstand 9 und 10 einen Finger 11 und 12 aufweist. Seitliche, an dem Zylinder 3 gelagerte Führungsstangen 14 und 15 sichern den Überschieber 7 vor Drehung um seine Längsachse.

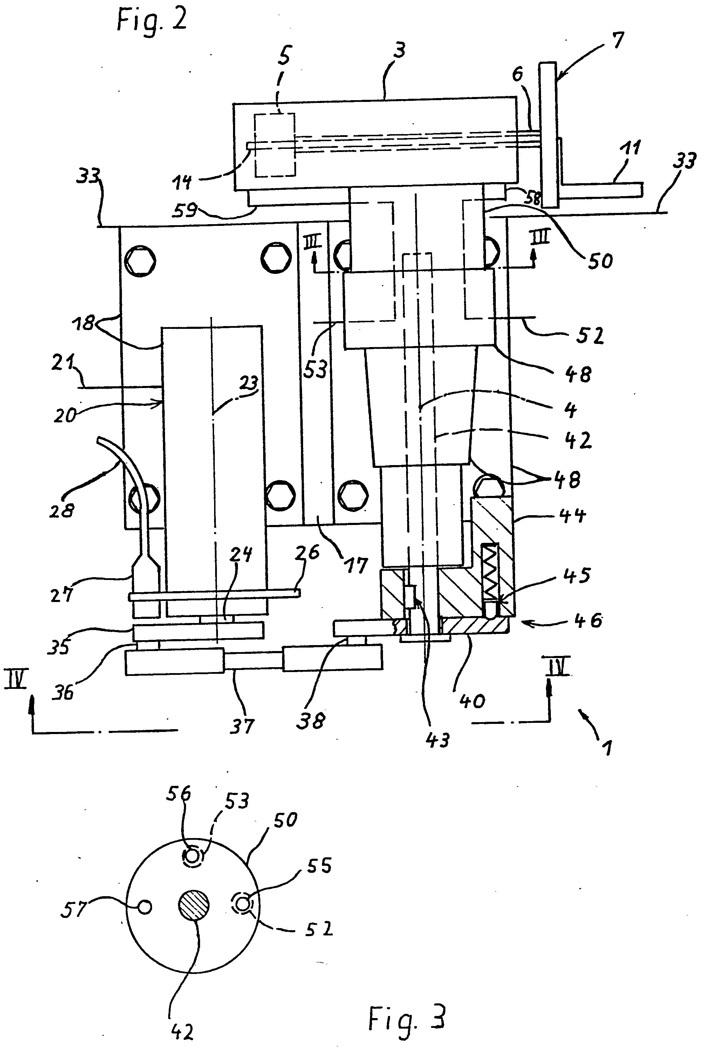

Seinen Schwenkantrieb um die Hochachse 4 erhält der Zylinder 3 durch einen an einer Grundplatte 17 mittels eines Gehäuses 18 befestigten Motor 20. Der Motor 20 ist ein stufenlos in der Drehzahl regelbarer, permanent erregter Gleichstrom-Getriebemotor mit einer elektrischen Versorgungsleitung 21. Eine Längsachse 23 einer Abtriebswelle 24 (Fig. 2) des Motors 20 ist in den Fig. 1 und 2 eingezeichnet. Das Gehäuse 18 trägt eine Halteplatte 26 für einen berührungslosen Endschalter 27 mit einer elektrischen Leitung 28.

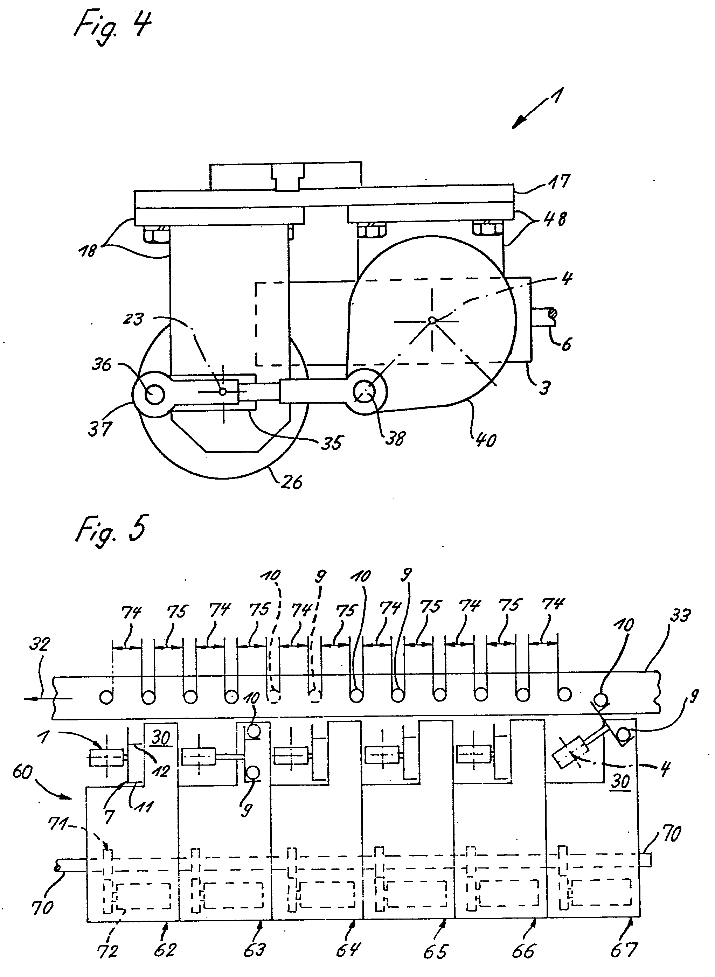

Eine im Zusammenhang mit Fig. 5 näher beschriebene Station einer glasverarbeitenden Maschine arbeitet in dem hier beschriebenen Ausführungsbeispiel im sogenannten Doppelformbetreib, fertigt also jeweils gleichzeitig zwei Glasgegenstände 9, 10. Die fertigen Glasgegenstände 9 und 10 werden durch Mechanismen der Station auf einer Absetzplatte 30 der Station in den in Fig. 1 gestrichelt eingetragenen Stellungen abgesetzt. Sodann wird Druckmedium auf die in Fig. 1 linke Seite des Kolbens 5 geleitet, wodurch der Überschieber 7 sich aus seiner in Fig. 1 voll ausgezogenen Ruhestellung nach rechts in eine in Fig. 1 gestrichelt eingezeichnete Übernahmestellung bewegt, in der die Finger 11 und 12 sich neben die Glasgegenstände 9 und 10 legen. Sodann wird der Motor 20 in später noch im einzelnen zu beschreibender Weise über die Versorgungsleitung 21 gestartet und schwenkt den Zylinder 3 im Gegenuhrzeigersinn zusammen mit den Glasgegenständen 9 und 10 bis in die in Fig. 1 strichpunktiert eingetragene Stellung, in der die Übergabe der Glasgegenstände 9 und 10 an ein in Richtung eines Pfeiles 32 laufendes Förderband 33 geschieht. Sodann wird die Ringfläche des Kolbens 5 mit Druckmedium beaufschlagt, wodurch der Überschieber 7 wieder an den Zylinder 3 herangezogen wird. Sobald die Finger 11 und 12 außer Reichweite der gerade übergeschobenen Glasgegenstände 9 und 10 sind, wird über die Versorgungsleitung 21 der Motor 20 erneut eingeschaltet und schwenkt den Zylinder 3 um die Hochachse 4 im Uhrzeigersinn, bis die in Fig. 1 voll ausgezogene Ruhestellung des Zylinders 3 wieder erreicht ist. Danach kann der Überschiebezyklus erneut beginnen.

Gemäß Fig. 2 ist and der Abtriebswelle 24 des Motors 20 eine Kurbel 35 befestigt, an deren Kurbelzapfen 36 ein Pleuel 37 angelenkt ist, das andererseits an einem Zapfen 38 einer Schwinge 40 angelenkt ist.

Der Endschalter 27 wird durch die Kurbel 35 betätigt.

Die Schwinge 40 sitzt lose auf einer Welle 42, deren Achse die Hochachse 4 ist. Mit der Welle 42 ist über eine Nut-Feder-Verbindung 43 ein Mitnehmer 44 verbunden, der durch eine federbelastete Rastverbindung 45 durch die Schwinge 40 drehend mitgenommen wird. Es handelt sich dabei um eine Überlastkupplung 46 zur Verhinderung von Zerstörungen der Überschiebevorrichtung 1 bei auftretenden Drehwiderständen.

Die Welle 42 ist in einem an der Grundplatte 17 befestigten Gehäuse 48 drehbar gelagert. An dem in Fig. 2 oberen Ende der Welle 42 ist ein Drehschieber 50 befestigt, an dem wiederum der Zylinder 3 befestigt ist.

Wie auch Fig. 3 zeigt, weist das Gehäuse 48 Druckmediumleitungen 52 und 53 auf, die in Umfangsrichtung um 90° gegeneinander versetzt sind. Der Drehschieber 50 weist Anschlüsse 55, 56 und 57 auf, die jeweils um 90° gegeneinander versetzt sind, und mit denen wahlweise entweder eine Druckmediumleitung 58 oder eine Druckmediumleitung 59 des Zylinders 3 mit Druckmedium beaufschlagbar ist, während die jeweils andere Druckmediumleitung mit dem Rücklauf bzw. mit Atmosphäre verbunden ist.

Fig. 4 zeigt die Überschiebevorrichtung 1 in der Ansicht von unten.

In Fig. 5 ist neben dem Förderband 33 eine Maschine 60 mit sechs Stationen 62 bis 67 aufgebaut. Alle Stationen 62 bis 67 sind in gleicher Weise mit der Überschiebevorrichtung 1 und der Absetzplatte 30 ausgestattet. Eine Hauptsteuerwelle 70 durchzieht alle Stationen 62 bis 67 der Maschine 60 und treibt in jeder Station über ein Getriebe 71 eine an sich bekannte Steuertrommel 72, die die einzelnen Funktionen der zugehörigen Station in der gewünschten zeitlichen Reihenfolge steuert.

Der Abstand der Finger 11 und 12 jedes Überschiebers 7 voneinander ist gleich und konstant und bestimmt gleich große Abstände 74 der beiden Glasgegenstände 9 und 10 voneinander, wenn diese aus den Stationen 62 bis 67 auf das Förderband 33 übergeschoben sind. Die aus einer der Stationen 62 bis 67 stammenden Glasgegenstände 9 und 10 haben auf dem Förderband 33 jeweils einen Abstand 75 von den benachbarten Glasgegenständen 10 und 9, die aus anderen Stationen stammen. Wesentliches Anliegen der Erfindung ist es, die Abstände 75, wie in Fig. 5 eingezeichnet, gleich dem Abstand 74 zu machen und zu halten.

In Station 63 hat der Überschieber 7 sich gerade neben die auf der Absetzplatte 30 stehenden Glasgegenstände 9 und 10 bewegt, deren endgültige Positionen auf dem Förderband 33 in Fig. 5 gestrichelt eingetragen sind. In der Station 67 werden die Glasgegenstände 9 und 10 gerade durch den Überschieber 7 durch Schwenkung um die Hochachse 4 von der Absetzplatte 30 auf das Förderband 33 übergeschoben.

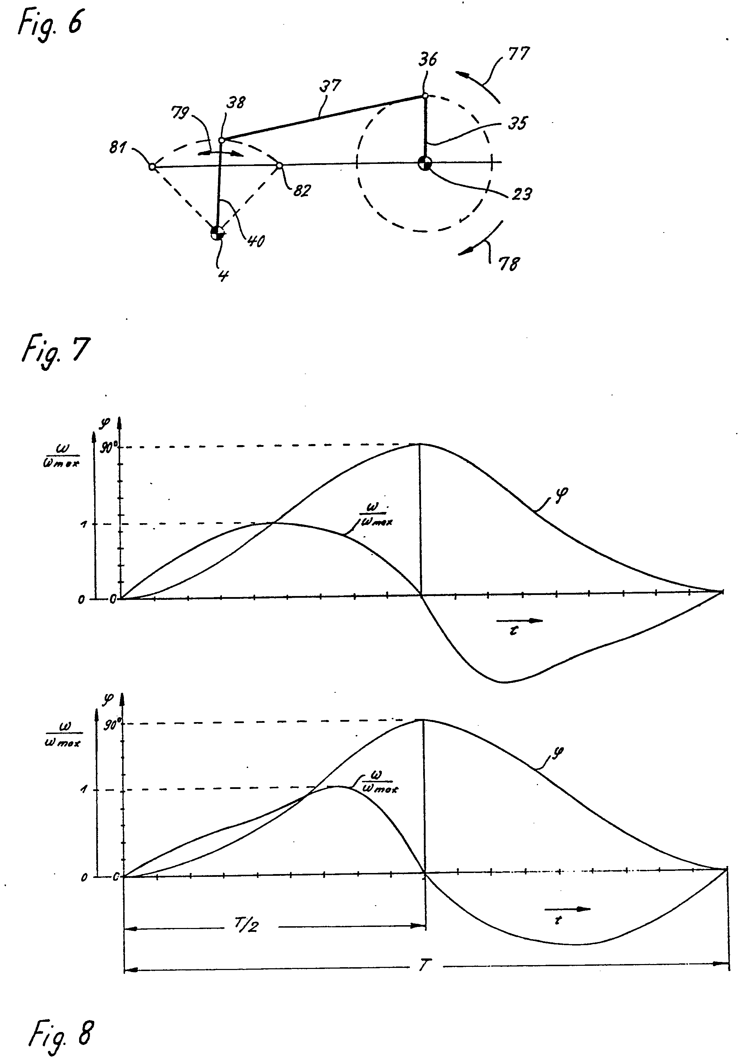

In Fig. 6 ist das Getriebe zwischen der Längsachse 23 des Motors 20 und der Hochachse 4 des Zylinders 3 schematisch dargestellt. Während eines Überschiebezyklus T (Fig. 8) der Überschiebevorrichtung 1 vollführt die Kurbel 35 eine ganze Umdrehung entweder in Richtung eines Pfeiles 77

5

im Gegenuhrzeigersinn oder in Richtung eines Pfeiles 78 im Uhrzeigersinn. In beiden Fällen schwenkt die Schwinge 40 in Richtung eines Doppelpfeils 79 zunächst um 90° in der einen Richtung und dann um 90° in der entgegengesetzten Richtung. Fig. 6 zeigt die Mittelstellung der Schwinge 40 zwischen zwei Endpunkten 81 und 82 der Bewegungsbahn ihres Zapfens 38.

In den Fig. 7 und 8 sind jeweils über der Zeit t der Drehwinkel $\tau$ und die Winkelgeschwindigkeit der Schwinge 40 in Gestalt des Verhältnisses $\omega/\omega_{max}$ aufgetragen. Dabei kennzeichnet Fig. 7 die Verhältnisse, wenn die Kurbel 35 in Richtung des Pfeiles 77 umläuft und Fig. 8 die Verhältnisse wenn die Kurbel 35 in Richtung des Pfeiles 78 umläuft. Der Umlauf in Richtung des Pfeiles 77 gemäß Fig. 7 eignet sich insbesondere für langsam laufende Überschiebevorrichtungen 1. Dagegen ist die Drehung der Kurbel 35 in Richtung des Pfeiles 78 gemäß Fig. 8 für Schnellauf geeignet. In diesem Fall ist der verhältnismäßig langsame Anstieg der Winkelgeschwindigkeit erwünscht. Auf diese Weise läßt sich die Geschwindigkeit des Überschiebers 7 am Ende des Überschiebevorgangs (bei T/2 in Fig. 8) besser der Geschwindigkeit des Förderbandes 33 angleichen. Im praktischen Betrieb ist bei der Übergabe der Glasgegenstände 9 und 10 an das Förderband 33 die Geschwindigkeit des Überschiebers 7 etwas größer als die Geschwindigkeit des Förderbandes 33, damit der Abstand 74 zwischen den Glasgegenstanden 9 und 10 gleichbleibend gewährleistet ist.

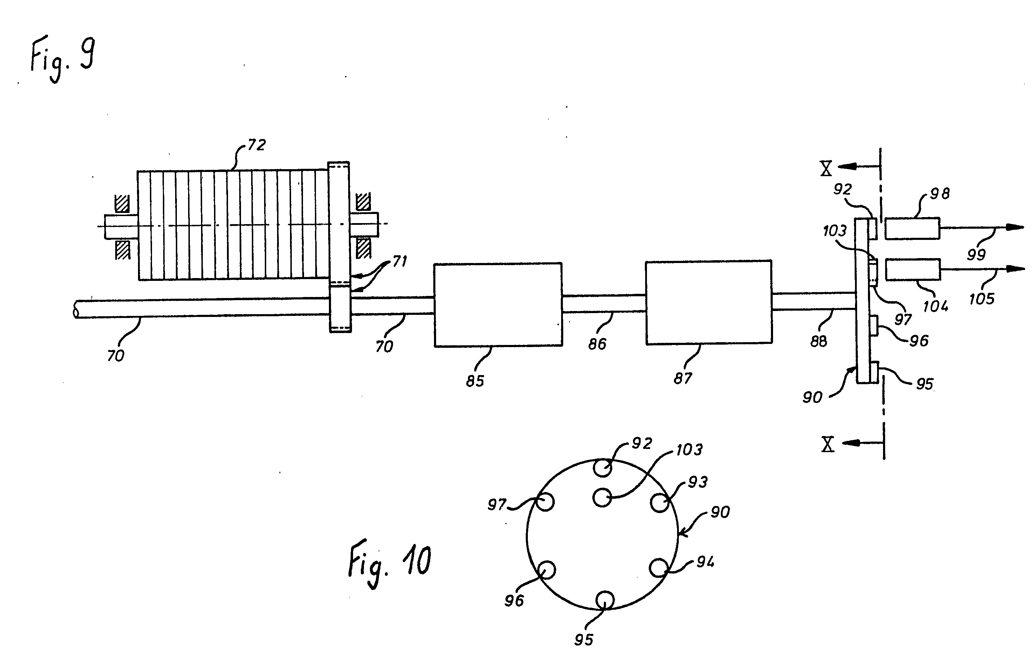

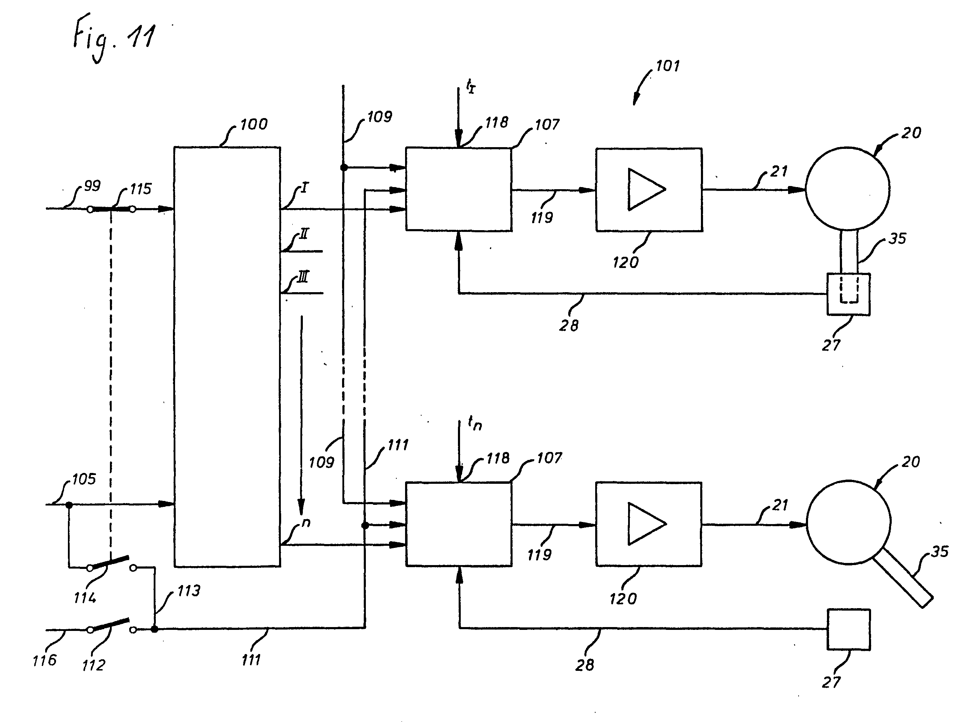

In Fig. 9 treibt die Hauptsteuerwelle 70 der Maschine 60 ein Kompensationsgetriebe 85 mit dem umgekehrt gleichen Übersetzungsverhältnis wie das Getriebe 71 an. Das Kompensationsgetriebe 85 treibt seinerseits über eine Welle 86, die mit der gleichen Winkelgeschwindigkeit wie die Steuertrommel 72 umläuft, ein Phasenverstellgetriebe 87 an, an dessen Abtriebswelle 88 eine allen Stationen 62 bis 67 der Maschine 60 gemeinsame Geberscheibe 90 befestigt ist. Die Geberscheibe 90 weist, wie auch Fig. 10 zeigt, an ihrem Umfang für jede der Stationen 62 bis 67 ein nockenartiges Schaltelement 92 bis 97 auf. Die Schaltelemente 92 bis 97 wirken während eines gesamten Maschinenzyklus nacheinander berührungslos mit einem Wandler 98 zusammen, der über eine Leitung 99 Taktsignale in eine Steuerlogik 100 (Fig. 11) einer elektronischen Schaltung 101 der Maschine 60 eingibt. Jedes der Schaltelemente 92 bis 97 bewirkt während eines Maschinenzyklus ein derartiges Taktsignal auf der Leitung 99.

Die Geberscheibe 90 trägt weiter innen außerdem ein nockenartiges Schaltelement 103, daß mit einem Wandler 104 berührungslos zusammenwirkt. Während eines Maschinenzyklus wird von dem Wandler 104 ein Maschinensignal über eine Leitung 105 in die Steuerlogik 100 eingegeben.

Die Steuerlogik 100 weist für jede Station, z.B. 62 bis 67, der Maschine 60 einen Ausgang I, II, III bis n auf, die jeweils mit einem Eingang einer Sollwertaufbereitungsschaltung 107 verbunden sind. Mit einem weiteren Eingang jeder Sollwertaufbereitungsschaltung 107 ist eine gemeinsame Leitung 109 verbunden, an der eine Sollspannung von wählbarer Größe anliegt. Diese Sollspannung ist direkt proportional der Drehzahl der Motoren 20. Über die Einstellung der Größe der Sollspannung läßt sich also die Überschiebedauer der Überschiebevorrichtungen 1 beeinflussen. Unterschiedliche überzuschiebende Glasgegenstände 9, 10 erfordern unter Umständen zum optimalen Überschieben unterschiedliche Überschiebedauern. Dem läßt sich durch die geeignete Vorwahl der Größe der Sollspannung an der Leitung 109 Rechnung tragen.

Mit einem weiteren Eingang jeder Sollwertaufbereitungsschaltung 107 ist eine allen Stationen gemeinsame Handstartsteuerleitung 111 mit einem Handschalter 112 verbunden. Die Handstartsteuerleitung 111 ist durch eine einen Handschalter 114 aufweisende Leitung 113 mit der Leitung 105 für das Maschinensignal verbunden. Der Handschalter 114 ist gekuppelt mit einem Schalter 115 in der Leitung 99 für die Taktsignale. Die Handstartsteuerleitung 111 gestattet es, alle Motoren 20 vor Beginn des eigentlichen Betriebs der Maschine 60 phasengleich miteinander laufen zu lassen. Dazu wird entweder bei geöffnetem Handschalter 114 der Handschalter 112 geschlossen, wodurch über eine Leitung 116 ein Startsignal gleichzeitig auf alle Sollwertaufbereitungsschaltungen 107 gegeben werden kann. Alternativ kann auch der Handschalter 112 geöffnet bleiben und der Handschlater 114 geschlossen werden. Durch dieses Schließen wird gleichzeitig selbsttätig der Schalter 115 geöffnet, so daß Taktsignale nicht mehr in die Steuerlogik und von dort in die Sollwertaufbereitungsschaltungen 107 gelangen können. Vielmehr wird das auf der Leitung 105 anstehende Maschinensignal über den geschlossenen Schalter 114, die Leitung 113, und die Handstartsteuerleitung 111 als allen Sollwertaufbereitungsschaltungen 107 gemeinsames Startsignal verwendet.

Einem weiteren Eingang 118 jeder Sollwertaufbereitungsschaltung 107 kann ein individueller Zeitsollwert $t_l$ bis $t_n$ zugeleitet werden, wie später näher erläutert wird. Jede Sollwertaufbereitungsschaltung 107 ist über eine Leitung 119 mit einem Leistungsverstärker 120 verbunden, dessen Ausgang jeweils mit der Versorgungsleitung 21 des zugehörigen Motors 20 verbunden ist.

Die Leitungen 99 und 105 münden in einen elektronischen Zähler 122, der für jede Station, z.B. 62 bis 67, der Maschine 60 eine allen Stationen gemeinsame Ausgangsleitung 124 bis 133 aufweist. Für jede Station, z.B. 62, der Maschine 60 ist jede dieser Ausgangsleitungen 124 bis 133 über eine Leitung 134 bis 143 mit einem gesonderten Kontakt 144 bis 153 eines Kodierschalters 154 verbunden. Ein Schleifer 157 des Kodierschalters 154 ist einerseits ständig mit dem zugehörigen Ausgang, z.B. I, der Steuerlogik 100 und andererseits wahlweise mit einem der Kontakte 144 bis 153 oder mit einem zusätzlichen Kontakt 158 verbunden. Dieser zusätzliche Kontakt 158 definiert eine Nullstellung des Kodierschalters 154, in der keinerlei Startsignale an den zugehörigen Ausgang, z.B. I, der Steuerlogik

gelangen können. Das bedeutet, daß die zugehörige Überschiebevorrichtung 1 stillgelegt ist. Dies ist dann von Vortiel, wenn sich auch die zugehörige Station, z.B. 62, der Maschine 60 nicht im Betrieb befindet.

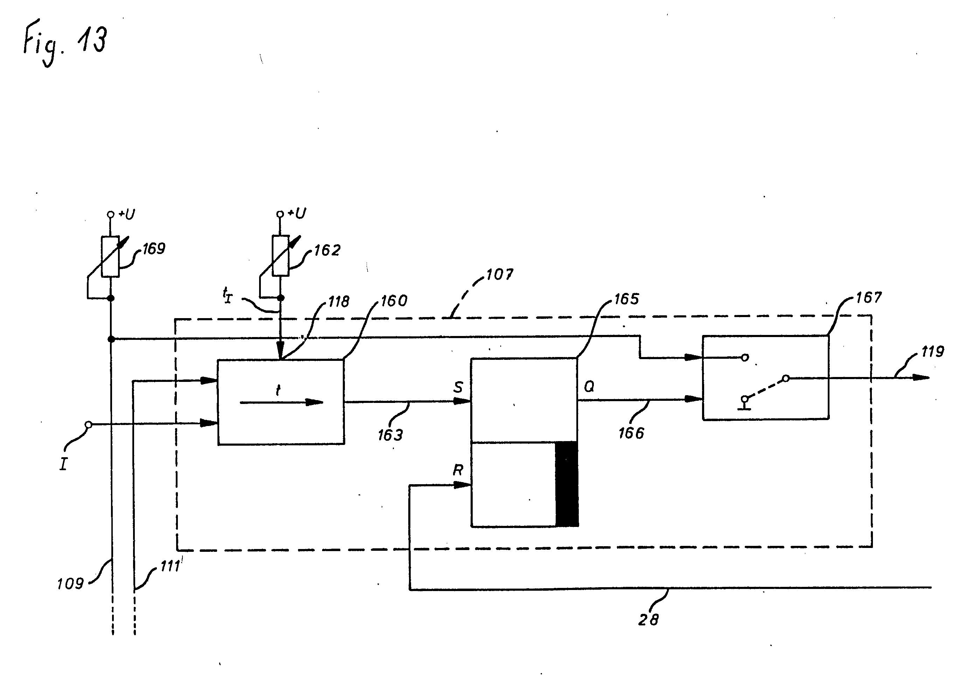

Alle Sollwertaufbereitungsschaltungen 107 sind gleich aufgebaut. Der Aufbau wird im Zusammenhang mit Fig. 13 für eine dieser Sollwertaufbereitungsschaltungen 107 beschrieben. Der zugehörige Ausgang, in diesem Fall I, der Steuerlogik 100 und auch die Handstartsteuerleitung 111 sind jeweils mit einem Eingang eines einstellbaren Verzögerungsglieds 160 verbunden. An dem Eingang 118 wird der gewünschte Zeitsollwert $t_i$ mittels eines Potentiometers 162 eingestellt. Der Ausgang des Verzögerungsgliedes 160 ist über eine Leitung 163 mit dem Set-Eingang S eines Flipflops 165 verbunden, an dessen Reset-Eingang R die Leitung 28 liegt. Sobald also der Endschalter 27 durch die Kurbel 35 betätigt wird, gelangt über die Leitung 28 ein Abschaltsignal an den Flipflop 165, dessen Ausgang über eine Leitung 166 mit einem Eingang eines elektronischen Analogschalters 167 verbunden ist. Ein weiterer Eingang des Analogschalters 167 ist mit der* Sollspannung führenden Leitung 109 verbunden. Die Größe der Sollspannung auf der Leitung 109 wird über ein externes Potentiometer 169 eingestellt.

Der Ausgang des Analogschalters 167 ist mit der zu dem Leistungsverstärker 120 führenden Leitung 119 verbunden.

Über die Einstellung des Zeitsollwerts $t_i$ and dem Potentiometer 162 läßt sich an dem Verzögerungsglied 160 die erforderliche Größe derjenigen Zeitverzögerung einstellen, mit der das am Ausgang I der Steuerlogik auftretende Startsignal an den Analogschalter 167 gelangen und diesen zum Starten des zugehörigen Motors 20 schließen kann. So läßt sich also der Startzeitpunkt des Motors 20 bei an dem Potentiometer 169 vorgewählter Sollspannung bestimmen. Das erlaubt eine Phasenkorrektur jedes Motors 20 gegenüber den anderen Motoren 20 der Maschine 60 und damit eine Korrektur des relativen Abstands der Glasgegenstandspaare 9, 10 auf dem Förderband 33.

Fig. 14 zeigt eine abgewandelte Ausführungsform der elektronischen Schaltung 101 insofern, als der Motor 20 einen Tachogenerator 170 antreibt, der dem Ist-Wert der Drehzahl des Motors 20 analoge elektrische Signale über eine Leitung 171 auf einen Regeleingang des in diesem Fall mit regelbarem Verstärkungsfaktor ausgebildeten Leistungsverstärkers 120 gibt. Diese Leitung ermöglicht eine geregelte Konstanthaltung der Drehzahl des Motors 20.

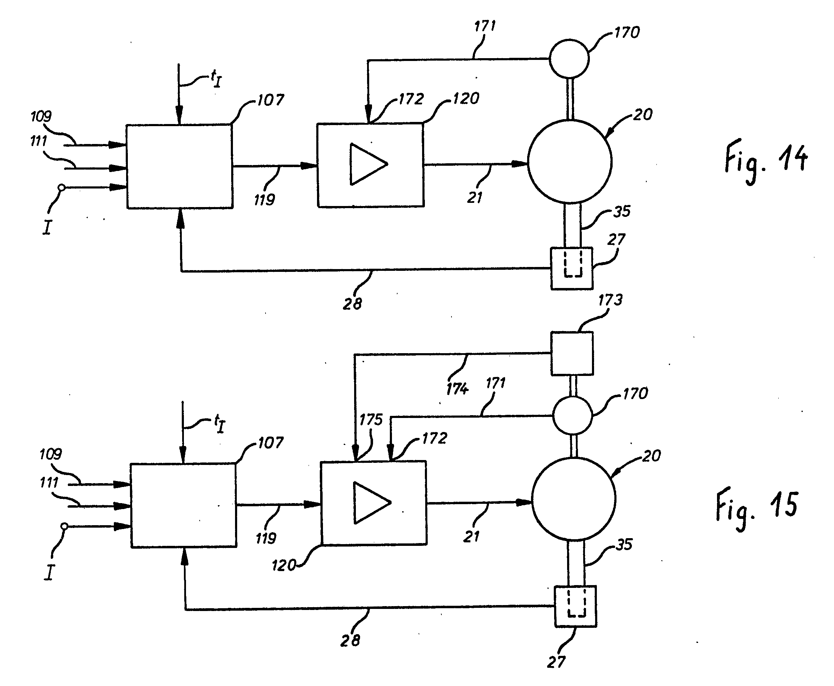

Eine weitere Ausführungsform der elektronischen Schaltung 101 ist in Fig. 15 dargestellt. Zusätzlich zu dem auch in Fig. 14 vorhandenen Regelkreis 170, 171 und 172 wird gemäß Fig. 15 durch den Motor 20 außerdem ein Drehwinkelstellungsgeber 173 angetrieben, der über eine Leitung 174 Signale an einen Regeliengang 175 des Leistungsverstärkers 120 gibt. Der Drehwinkelstellungsgeber 173 nimmt einen Vergleich des Ist-Werts und des Sollwerts der Drehwinkelstellung der Kurbel 35 des Motors 20 vor. Bei Abweichungen werden Regelsignale über die Leitung 174 auf den Regeleingang 175 des Leistungsverstärkers 120 gegeben. Man erhält auf diese Weise eine Lageregelung der Kurbel 35.

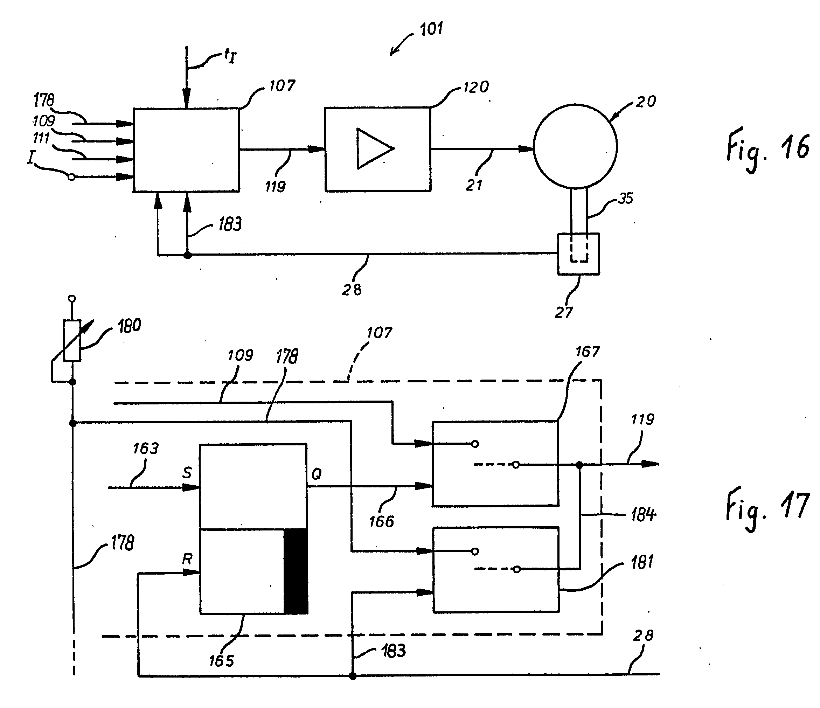

Fig. 16 zeigt eine wiederum abgewandelte Ausführungsform der elektronischen Schaltung 101. Über eine Leitung 178 wird einem weiteren Eingang der Sollwertaufbereitungsschaltung 107 ein Schleichspannungssollwert zugeführt., der niedriger als der an der Leitung 109 anstehende Spannungssollwert und vorzugsweise von konstanter Größe ist.

Einzelheiten der Sollwertaufbereitungsschaltung 107 gemäß Fig. 16 sind in Fig. 17 dargestellt. Über ein externes Potentiometer 180 wird die Größe des Schleichspannungssollwerts eingestellt und auf die allen Stationen 62 bis 67 der I.S.-Maschine gemeinsame Leitung 178 gegeben. Die Leitung 178 ist in jeder der Sollwertaufbereitungsschaltungen 107 mit einem Eingang eines elektronischen Schleichwertanalogschalters 181 verbunden, während die von dem Endschalter bzw. Näherungsinitiator 27 kommende Leitung 28 über eine abgezweigte Leitung 183 mit einem weiteren Eingang des Schleichwertanalogschalters 181 verbunden ist. Ein Ausgang des Schleichwertanalogschalters 181 ist durch eine Leitung 184 mit der von dem Analogschalter 167 zu dem Leistungsverstärker 120 (Fig. 11) führenden Leitung 119 verbunden.

Die Kurbel 35 hat eine endliche Breite und bewirkt beim Erreichen des Endschalters 27 die Erzeugung eines Signals, das über die Leitung 28 einerseits dem R-Eingang des Flipflops 165 zur Öffnung des Analogschalters 167 und andererseits über die abgezweigte Leitung 183 zum Schließen des Schleichwertanalogschalters 181 zugeführt wird. Diese beiden Umschaltvorgänge bewirken einen Wechsel von dem bisherigen Betriebsspannungssollwert auf den kleineren Schleichspannungssollwert. Dadurch geht der Motor 20 auf eine verhältnismäßig langsame Schleichfahrt über, aus der heraus er sehr positionsgenau angehalten werden kann. Dies geschieht, wenn die Kurbel 35 den Endschalter 27 verläßt. In diesem Augenblick wird auf die Leitungen 28 und 183 ein weiteres Signal gegeben, das die Öffnung des Schleichwertanalogschalters 181 und damit die vollständige Abschaltung des Motors 20 zur Folge hat. Da die Schleichdrehzahl des Motors 20 konstant ist, ist auch ein eventueller Auslaufweg der Kurbel 35 nach dem Öffnen des Schleichwertanalogschalters 181 von konstanter Größe, so daß sich praktisch durch Positionierung des Endschalters 27 jede gewünschte genaue Endlage der Kurbel 35 erreichen läßt.

Die elektronische Schaltung 101 kann aus modularen Einheiten aufgebaut sein, die sich bei Bedarf in kürzester Zeit und leicht gegen neue austauschen lassen.

*die

**0 001 649**

**Patentansprüche**

1. Glasformmaschine mit mehreren Stationen und mit je Station einer Vorrichtung zum Überschieben von Glasgegenständen von einer Absetzplatte auf ein allen Stationen gemeinsames Förderband, bestehend aus einem druckmediumbetätigbaren, auf einer senkrechten Welle befestigten Zylinder, der eine einen Überschieber tragende Kolbenstange ein- und ausfährt, die aufgrund einer Wellendrehung zwischen dem Förderband und der Absetzplatte hin- und herschwenkbar ist, dadurch gekennzeichnet, daß die Wellendrehung von einem Elektromotor (20) erzeugt wird, dessen Drehbewegung unabhängig von den Elektromotoren (20) der übrigen Überschiebevorrichtungen (1) auch während des Betriebs mittels einer Steuerschaltung steuerbar und/oder regelbar ist.

2. Maschine nach Anspruch 1, dadurch gekennzeichnet, daß an einer Kurbel (35) des Elektromotors (20) ein Pleuel (37) angelenkt ist, das andererseits an einer mit der Welle (42) des Zylinders (3) gekuppelten Schwinge (40) angelenkt ist.

3. Maschine nach Anspruch 1 oder 2, dadurch gekennzeichnet, daß in der Steuerschaltung (101) für die Elektromotoren (20) der Überschiebevorrichtungen (1) einer Steuerlogik (100) an einem Eingang während eines Maschinenzyklus für jede Station (62 bis 67) ein Taktsignal (vgl. 99) und an einem weiteren Eingang ein am Ende eines Maschinenzyklus die Steuerlogik (100) rückstellendes Maschinensignal (vgl. 105) zuführbar sind, daß jeder Station (62 bis 67) ein in jedem Maschinenzyklus jeder aktiven Station in vorherbestimmter zeitlicher Reihenfolge einen Startimpuls liefernder Ausgang (I, II, III bis n) der Steuerlogik (100) zugeordnet ist, daß jeder Ausgang (I, II, III bis n) der Steuerlogik (100) mit einem Eingang einer Sollwertaufbereitungsschaltung (107) verbunden ist, die über einen weiteren Eingang mit einem für alle Stationen gleichen Spannungssollwert (vgl. 109) versorgt wird, ein über einen anderen Eingang (118) einstellbares, mit dem Startimpulsausgang (I, II, III bis n) der Steuerlogik (100) verbundenes Verzögerungsglied (160) aufweist und einen mit dem Spannungssollwerteingang (vgl. 109) und mit einem Ausgang des Verzögerungsglieds (160) verbundenen elektronischen Analogschalter (167) aufweist, dessen Ausgang (vgl. 119) über einen Leistungsverstärker (120) mit dem Elektromotor (20) verbunden ist.

4. Maschine nach Anspruch 3, dadurch gekennzeichnet, daß durch eine Hauptsteuerwelle (70) der Maschine (60) eine allen Stationen (62 bis 67) gemeinsame Geberscheibe (90) mit Schaltelementen (92 bis 97, 103) antreibbar ist, wobei eines (103) der Schaltelemente einem das Maschinensignal (vgl. 105) erzeugenden stationären Wandler (104) und die übrigen Schaltelemente (92 bis 97) einem gemeinsamen, die Taktsignale (vgl. 99) erzeugenden stationären Wandler (98) zugeordnet sind.

5. Maschine nach Anspruch 4, dadurch gekennzeichnet, daß zwischen die Hauptsteuerwelle (70) und die Geberscheibe (90) ein Phasenverstellgetriebe (87) eingeschaltet ist.

6. Maschine nach Anspruch 4 oder 5, dadurch gekennzeichnet, daß die Steuerlogik (100) einen mit dem Maschinensignal (vgl. 105) und den Taktsignalen (vgl. 99) gespeisten elektronischen Zähler (122) aufweist, daß der Zähler (122) für jede Station (62 bis 67) der Maschine (60) eine jeweils allen Stationen (62 bis 67) gemeinsame Ausgangsleitung (124 bis 133) aufweist, daß für jede Station (62 bis 67) jede Ausgangsleitung (124 bis 133) mit einem gesonderten Kontakt (144 bis 153) eines Kodierschalters (154) verbunden ist, und daß ein Schleifer (157) des Kodierschalters (154) mit jeweils einem der Kontakte (144 bis 153) wahlweise verbindbar ist und ständig mit dem Startimpulseingang (vgl. I, II, III bis n) der Sollwertaufbereitungsschaltung (107) verbunden ist.

7. Maschine nach Anspruch 6, dadurch gekennzeichnet, daß jeder Kodierschalter (154) einen eine Nullstellung ohne Startimpulsübermittlung für den Schleifer (157) definierenden zusätzlichen Kontakt (158) aufweist.

8. Maschine nach einem der Ansprüche 3 bis 7, dadurch gekennzeichnet, daß zwischen das Verzögerungsglied (160) und den elektronischen Analogschalter (167) ein Flipflop (165) eingeschaltet ist, dessen Reset-Eingang (R) mit einem in einer Endlage der Kurbel (35) betätigbaren Impulsgeber (vgl. 27) verbunden ist.

9. Maschine nach einem der Ansprüche 3 bis 8, dadurch gekennzeichnet, daß mit jedem Elektromotor (20) ein Tachogenerator (170) gekuppelt ist, der mit einem Eingang (172) des regelbaren Leistungsverstärkers (120) verbunden ist.

10. Maschine nach einem der Ansprüche 3 bis 8, dadurch gekennziechnet, daß mit jedem Elektromotor (20) ein Tachogenerator (170) und ein Drehwinkelstellungsgeber (173) gekuppelt sind, die jeweils mit einem Eingang (172; 175) des regelbaren Leistungsverstärkers (120) verbunden sind.

11. Maschine nach einem der Ansprüche 3 bis 8, dadurch gekennzeichnet, daß in jeder *Sollaufbereitungsschaltung (107) parallel zu dem elektronischen Analogschalter (167) ein elektronischer Schleichwertanalogschalter (181) vorgesehen ist, an dessen einem Eingang ein für alle Stationen (62 bis 67) gleicher Schleichspannungssollwert (vgl. 178, 180) liegt und dessen Ausgang (vgl. 119) über den Leistungsverstärker (120) mit dem Elektromotor (20) verbunden ist, und daß der Schleichwertanalogschalter (181) durch ein den Analogschalter (167) öffnendes Signal (vgl. 27; 28) schließbar und

---

*wert

8

**0 001 649**

durch ein von der Überschiebevorrichtung (1; 35) abgeleitetes Lagesignal wieder öffenbar ist.

12. Maschine nach einem der Ansprüche 3 bis 11, dadurch gekennzeichnet, daß mit einem zusätzlichen Eingang jedes Verzögerungsgliedes (160) eine allen Stationen (62 bis 67) gemeinsame Handstartsteuerleitung (111) mit einem Handstartschalter (112; 114) verbunden ist.

**Claims**

1. Multi-station glass-forming machine, each station comprising an article transfer means for transferring glass articles from a deposit location onto a conveyor belt common to all the stations, each article transfer means comprising a cylinder-and-piston unit actuatable by a pressure medium, the cylinder being mounted on a vertical shaft and extending and retracting a piston rod carrying a pushing means swingeable back and forth in response to rotation of said shaft between the conveyor belt and the deposit location, characterized in that the shaft (42) is rotated by an electric motor (20) whose rotation is regulatable and/or controllable through control means (101) even during machine operation independently of the electric motors (20) of the remainder of the article transfer means (1).

2. Machine according to claim 1, characterized in that a coupling rod (37) is connected to a crank (35) of the electric motor (20), the coupling rod (37) on the other hand being connected to a rocker (40) coupled to the shaft (42) of the cylinder (3).

3. Machine according to claim 1 or 2, characterized in that in said control means (101) for the electric motors (20) of the article transfer means (1) a timing signal (see 99) is applicable to an input of a control logic unit (100) for each station (62 to 67) during a machine cycle, and a machine-cycle signal (see 105) resetting the control logic unit (100) at the end of each machine cycle is applicable to a further input of the control logic unit (100); that to each station (62 to 67) an output (I, II, III to n) of the control logic unit (100) is assigned, supplying a start signal in each machine cycle to each active station in a predetermined time sequence; that each output (I, II, III to n) of the control logic unit (100) is connected to an input of a desired-rpm signal conditioning circuit (107) which via a further input is supplied with a desired-rpm voltage value (see 109) equal for all stations, furthermore comprises a time-delay stage (160) adjustable via another input (118) and connected to the start signal output (I, II, III to n) of the control logic unit (100), and comprises an electronic analog switch (167) connected to the desired-rpm voltage value input (see 109) and to an output of the time-delay stage (160), the output (see 119) of the electronic analog switch (167) being connected to the electric motor (20) via a power amplifier (120).

4. Machine according to claim 3, characterized in that a control disk (90) comprising control elements (92 to 97, 103) and common to all of the stations (62 to 67) is drivable through a main control shaft (70) of the machine (60), one (103) of the control elements being assigned to a stationary transducer (104) generating the machine-cycle signal (see 105), and the remainder (92 to 97) of the control elements being assigned to a common stationary transducer (98) generating the timing signals (see 99).

5. Machine according to claim 4, characterized in that a phase-adjusting means (87) is connected between the main control shaft (70) and the control disk (90).

6. Machine according to claim 4 or 5, characterized in that the control logic unit (100) comprises an electronic counter (122) supplied with the machine-cycle signal (see 105) and with the timing signals (see 99); that the counter (122) for each station (62 to 67) of the machine (60) comprises an output line (124 to 133) respectively common to all of the stations (62 to 67); that for each station (62 to 67) each output line (124 to 133) is connected to a separate stationary contact (144 to 153) of a selector switch (154); and that a moving contact (157) of the selector switch (154) is selectively connectable with respectively one of the stationary contacts (144 to 153) and is permanently connected to the start signal input (see I, II, III to n) of the desired-rpm signal conditioning circuit (107).

7. Machine according to claim 6, characterized in that each selector switch (154) comprises an additional stationary contact (158) defining a zero-setting for the moving contact (157) in which no start signals are transmitted.

8. Machine according to any of claims 3 to 7, characterized in that a flip-flop (165) is connected between the time-delay stage (160) and the electronic analog switch (167), the reset input (R) of the flip-flop (165) being connected to a signal generator (see 27) actuatable in an end position of the crank (35).

9. Machine according to any of claims 3 to 8, characterized in that a tacho-generator (170) is coupled to each electric motor (20) and is connected to an input (172) of the regulatable power amplifier (120).

10. Machine according to any of claims 3 to 8, characterized in that a tacho-generator (170) and a rotational angle position generator (173) are coupled to each electric motor (20) and are, respectively, connected to an input (172; 175) of the regulatable power amplifier (120).

11. Machine according to any of claims 3 to 8, characterized in that in each desired-rpm signal conditioning circuit (107) an electronic low-desired-rpm analog switch (181) is provided parallel to the

9

electronic analog switch (167), to one of whose inputs is applied a low-desired-rpm voltage value (see 178, 180) equal for all the stations (62 to 67), and whose output (see 119) is connected to the electric motor (20) via the power amplifier (120); and that the low-desired-rpm analog switch (181) is closable through a signal (see 27; 28) opening the analog switch (167) and is openable again through a position signal derived from the article transfer means (1; 35).

12. Machine according to any of claims 3 to 11, characterized in that a hand start control line (111) common to all the stations (62 to 67) and comprising a hand start switch (112; 114) is connected to an additional input of each time-delay stage (160).

**Revendications**

1. Machine à mouler des objets en verre comportant plusieurs postes et munie, par poste, d'un dispositif servant à transférer des objets en verre d'une plaque de dépôt sur une bande transporteuse commune à tous les postes, comprenant un vérin fixé sur un arbre vertical et pouvant être actionné par un agent sous pression pour rétracter et étendre une tige de piston portant un élément de transfert par glissement et qui peut pivoter dans un sens et dans l'autre entre la bande transporteuse et la plaque de dépôt à la suite d'une rotation de l'arbre, caractérisée en ce que la rotation de l'arbre (42) est produite par un moteur électrique (20) dont le mouvement de rotation peut être commandé et/ou réglé par un circuit de commande (101) même pendant le fonctionnement de la machine indépendamment des moteurs électriques (20) des autres dispositifs de transfert par glissement (1).

2. Machine suivant la revendication 1, caractérisée en ce qu'à une manivelle (35) du moteur électrique (20) est articulée une bielle (37) qui est articulée d'autre part à un plateau manivelle (40) accouplé à l'arbre (42) du vérin (3).

3. Machine suivant la revendication 1 ou 2, caractérisée en ce que, dans le circuit de commande (101) pour les moteurs électriques (20) des dispositifs de transfert par glissement (1), un signal d'horloge (voir 99) peut être amené à un dispositif logique de commande (100) à une entrée pendant un cycle de machine pour chaque poste (62 à 67) et un signal de machine (voir 105) ramenant le dispositif logique de commande (100) dans son état initial à la fin d'un cycle de machine peut y être amené à une autre entrée, à chaque poste (62 à 67) est adjointe une sortie (I, II, III jusque n) du dispositif logique de commande (100), fournissant une impulsion de démarrage, dans chaque cycle de machine, à chaque poste actif, dans un ordre prédéterminé dans le temps, chaque sortie (I, II, III jusque n) du dispositif logique de commande (100) est connectée à une entrée d'un circuit de préparation de la valeur de consigne (107) à laquelle est attribuée par l'intermédiaire d'une autre entrée une valeur de consigne de tension (voir 109) pareille pour tous les postes, présente un élément de retardement (160) connecté à sortie d'impulsions de démarrage (I, II, III jusque n) du dispositif logique de commande (100) et ajustable par l'intermédiaire d'une autre entrée (118) et présente un commutateur analogique électronique (167) connecté à l'entrée de valeur de consigne de tension (voir 109) et à une sortie de l'élément de retardement (160), la sortie (voir 119) de ce commutateur (167) étant connectée au moteur électrique (20) par l'intermédiare d'un amplificateur de puissance (120).

4. Machine suivant la revendication 3, caractérisée en ce qu'un disque générateur (90) commun à tous les postes (62 à 67) et portant des éléments de commutation (92 à 97, 103) peut être entraîné par un arbre de commande principal (70) de la machine (60), un (103) des éléments de commutation étant adjoint à un transducteur fixe (104) produisant le signal de machine (voir 105) et les autres éléments de commutation (92 à 97) étant adjoints à un transducteur fixe (98) commun produisant les signaux d'horloge (voir 99).

5. Machine suivant la revendication 4, caractérisée en ce qu'un mécanisme d'ajustage de phase (87) est intercalé entre l'arbre de commande principal (70) et le disque générateur (90).

6. Machine suivant la revendication 4 ou 5, caractérisée en ce que le dispositif logique de commande (100) comporte un compteur électronique (122) alimenté par le signal de machine (voir 105) et par les signaux d'horloge (voir 99), le compteur (122) pour chaque poste (62 à 67) de la machine (60) comporte un conducteur de sortie (124 à 133) commun à tous les postes (62 à 67), pour chaque poste (62 à 67) chaque conducteur de sortie (124 à 133) est connecté à un contact séparé (144 à 153) d'un commutateur de codage (154), et un curseur (157) de commutateur de codage (154) peut être connecté à volonté respectivement à un des contacts (144 à 153) et est connecté en permanence à l'entrée d'impulsions de démarrage (voir I, II, III jusque n) du circuit de préparation de la valeur de consigne (107).

7. Machine suivant la revendication 6, caractérisée en ce que chaque commutateur de codage (154) comporte un contact (158) supplémentaire définissant une position zéro sans transmission d'impulsion de démarrage pour le curseur (157).

8. Machine suivant l'une quelconque des revendications 3 à 7, caractérisée en ce qu'entre l'élément de retardement (160) et le commutateur analogique électronique (167) est connectée une bascule (165) dont l'entrée de repositionnement (R) est connectée à un générateur d'imulsions (voir 27) pouvant être actionné dans une position d'extrémité de la manivelle (35).

9. Machine suivant l'une quelconque des revendications 3 à 8, caractérisée en ce qu'une génératrice tachymétrique (170) est accouplée à chaque moteur électrique (20) et est connectée à une entrée (172) de l'amplificateur de puissance réglable (120).

10

10. Machine suivant l'une quelconque des revendications 3 à 8, caractérisée en ce qu'une generatrice tachymétrique (170) et un transmetteur d'angle de rotation (173) sont accouplés à chaque moteur électrique (20) et sont connectés respectivement à une entrée (172; 175) de l'amplificateur de puissance réglable (120).

11. Machine suivant l'une quelconque des revendications 3 à 8, caractérisée en ce que, dans chaque circuit de préparation de valeur de consigne (107) est prévu, en paralléle avec le commutateur analogique électronique (167), un commutateur analogique électronique de valeur de mouvement lent (181) à une entrée duquel est appliquée une valeur de consigne de tension de mouvement lent (voir 178, 180) pareille pour tous les postes (62 à 67) et dont la sortie (voir 119) est connectée au moteur électrique (20) par l'intermédiaire de l'amplificateur de puissance (120), et le commutateur analogique de valeur de mouvement lent (181) peut être fermé par un signal (voir 27; 28) ouvrant le commutateur analogique (167) et peut être à nouveau ouvert par un signal de position dérivé du dispositif de transfert par glissement (1; 35).

12. Machine suivant l'une quelconque des revendications 3 à 11, caractérisée en ce qu'un conducteur de commande de démarrage à main (111) muni d'un interrupteur de demarrage à main (112, 114) et commun à tous les postes (62 à 67) est connecté à une entrée supplémentaire de chaque élément de retardement (160).

**Fig. 1**

0 001 649

1

Fig. 2

0 001 649

Fig. 3

Fig. 4

Fig. 5

**Fig. 6**

**Fig. 7**

**Fig. 8**

Fig. 9

Fig. 10

Fig. 11

0001 649

Fig. 12

0 001 649

# Fig. 13

0 001 649

Fig. 14

Fig. 15

Fig. 16

Fig. 17